Europäisches Patentamt

European Patent Office

Office européen des brevets

(11) Publication number: **0 492 472 A1**

## EUROPEAN PATENT APPLICATION

(21) Application number: **91121860.0**

(22) Date of filing: **19.12.91**

(51) Int. Cl.5: **B65G 1/04**

(30) Priority: **28.12.90 IT 6807990**

(43) Date of publication of application:
**01.07.92 Bulletin 92/27**

(84) Designated Contracting States:
**AT BE CH DE ES FR GB LI NL**

(71) Applicant: **BERTELLO S.p.A.**
**Via Piave, 14**
**I-12011 Borgo San Dalmazzo(IT)**

(72) Inventor: **Anguissola, Remo**
**Località Rossignoli, 97**
**I-10071 Devesi(IT)**

(74) Representative: **Jorio, Paolo et al**
**Studio Torta, Via Viotti, 9**
**I-10121 Torino(IT)**

(54) **Apparatus for removing boxes from their seats in a mechanised filing or storage system and for inserting them therein.**

(57) The apparatus is usable for example in a bank safety-deposit-box system and is carried by a carriage (13) movable along at least one rack. Each box (10) has a grip (12) adapted to be engaged by an entrainment roller (33). This is carried by a first arm (35) of a linkage (34,35) having another arm (34) adapted to be pivoted relative to the carriage (13) by a first geared motor (53). The two arms (34,35) are of the same length and are connected by a gear system (62,63,66) which is arranged to rotate the first arm (35) in the opposite sense from the other, so that the roller (33) is moved along a rectilinear path. One (62) of these gears (62,63,66) is fixed to a structure (49) carrying the geared motor (53) and which may be rotated through a predetermined angle by a second geared motor (73) to bring the roller (53) into a rest position.

Fig.1

The present invention relates to apparatus for removing boxes from their seats in a mechanised storage or filing system and for inserting them therein, particularly for bank safety-deposit boxes.

It is known that in filing or storage systems for documents or other materials, the boxes are taken from their seats and brought to a consultation zone by a carriage carried by a conveyor-elevator mechanism. In one known system each box has a grip or handle member while the removal and insertion device has a closed-loop transmission chain which carries a pin adapted to engage the grip. In order to remove a box from its seat, the chain is driven in a first direction and, after the pin has engaged the grip, is displaced further in order to complete the removal of the box.

This apparatus has various disadvantages. First of all, the chain is rather noisy and, in some applications, does not effect the movements very precisely. The path of the pin is such as to require the hand grip to have a certain length and such as to create a certain degree of rolling on the grip during the engagement and disengagement movements. Moreover, during the initial and final phases of the box removal and/or insertion operations, the action of the pin is not aligned with axis of the box with the result that a transverse force is exerted which tends to move the box sideways, causing it to slide on the fixed guides of the rack. Finally, in the case of bank safety-deposit boxes, which are generally of limited dimensions, these known devices are expensive and difficult to use.

The object of the invention is to provide apparatus for the removal and insertion of such boxes which is extremely simple, precise and reliable in operation and elliminates the disadvantages of known apparatus.

This object is achieved with the removal and insertion apparatus of the invention, which includes a plurality of seats for the boxes, and a carriage adapted to be brought into correspondence with a box to be moved from the seat to the carriage, each box having a grip member for engagement by an entrainment element on the carriage, characterised in that the said element is part of a drive mechanism including a linkage having a first arm on which the element is disposed and means which can be actuated so as to drive the linkage to engage the element with the grip member and disengage it therefrom and so as to move the element thus engaged along a substantially rectilinear path.

In order to provide a better understanding of the invention, a preferred embodiment is now described by way of example, with the aid of the appended drawings, in which:

Figure 1 is a horizontal section of apparatus according to the invention for removing boxes from their seats and for inserting them therein;

Figure 2 is a partial median section of the apparatus taken on the line II-II of Figure 1, showing a different phase in its operation on an enlarged scale;

Figures 3, 4, 5 and 6 are four schematic diagrams of the apparatus of Figure 1, on a smaller scale and showing four different phases in its operation.

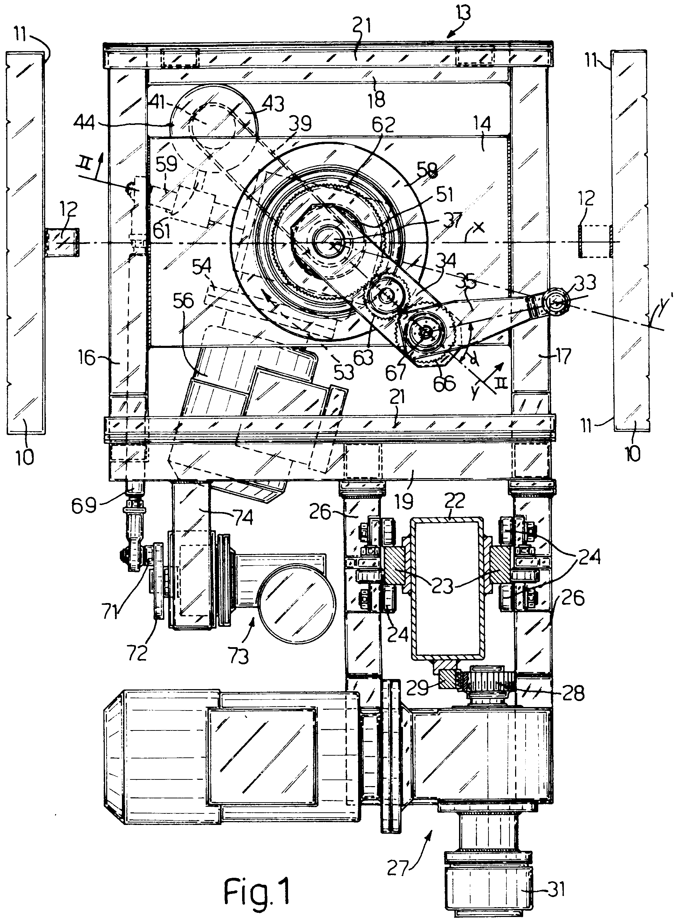

The removal and insertion apparatus of the invention is particularly suited for a bank safety-deposit box system, but may also be used in any storage or filing system which uses boxes 10 (Figure 1), which may be upwardly open or closed. The system may consist of a single rack or of two racks facing each other, each having a plurality of seats for the boxes 10. These may be of rectangular shape with a front wall 11 provided with a grip or handle member constituted by a tab 12 of inverted-U shape.

The system further includes at least one consultation zone and/or loading and discharge zone for the boxes 10 adjacent the racks, not indicated in the drawings, and a carriage, generally indicated 13, which is arranged to be moved between the consultation zone and any of the seats in the racks. The carriage 13 includes a horizontal plate 14 fixed to two strong longitudinal members 16 and 17 to which two transverse members 18 and 19 are fixed. The carriage 13 also carries a pair of angle-section guides 21 which are adapted to receive one box 10 at a time and to guide its movement in a direction X perpendicular to the front wall 11 of the box 10.

The carriage 13 is arranged to be moved vertically along a strong tubular pillar 22 of rectangular section which is carried by a structure which is movable horizontally along the racks, not shown in the drawings. More particularly, two vertical rails 23 are fixed to opposite sides of the pillar 22 and guide two series of rollers 24 carried by two bars 26 fixed to the transverse member 19.

The two bars 26 also carry a reversible geared motor generally indicated 27 which can be operated to rotate a pinion 28. This is engaged with a vertical rack 29 also fixed to the pillar 22. The pinion 22 is connected in known manner to a position transducer 31 to control the rotation of the geared motor 27.

The removal and insertion aparatus includes, as an essential part, a drive mechanism, generally indicated 32, which carries a drive element constituted by a roller 33 arranged to engage the grip 12. The mechanism 32 includes a linkage constituted by a pair of arms 34 and 35 pivoted together. The two arms 34 and 35 are of the same length, the arm 34 being rotatable on the plate 14 while the free end of the arm 35 carries a pin 36 on which the roller 33 is rotatable.

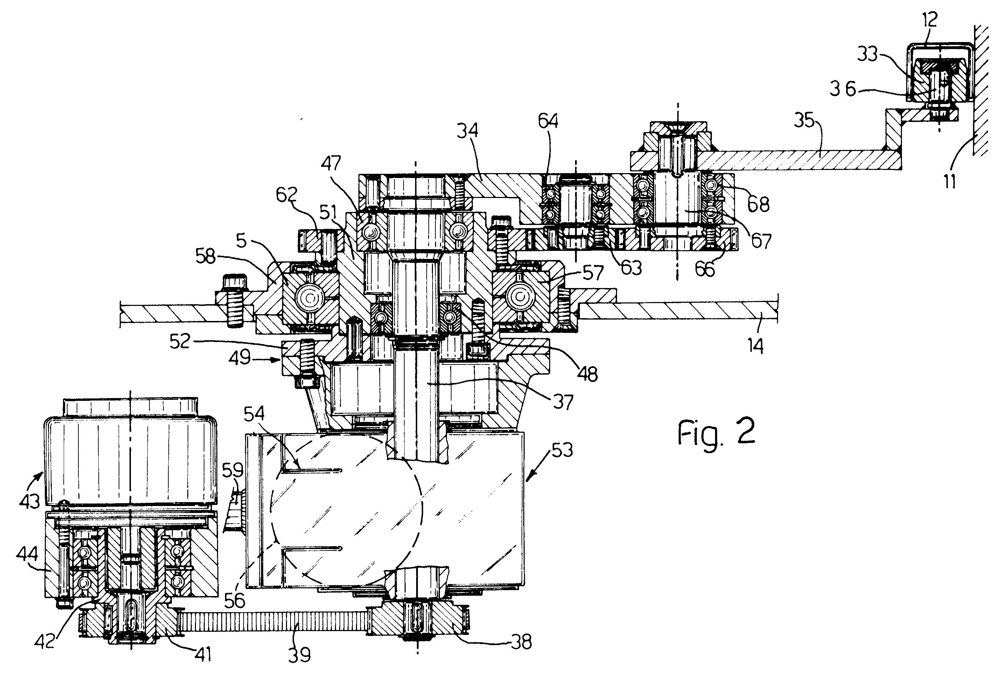

More particularly, the arm 34 is keyed to a vertical shaft 37 (Figure 2) to the lower end of which is keyed a toothed pulley 38. This is connected by a tooth belt 39 to another toothed pulley 41 which is in turn keyed to a shaft 42 of an angular position transducer generally indicated 43. The shaft 42 is rotatable on a support 44 for the transducer 43.

The shaft 37 is rotatable on a pair of rolling bearings 47 and 48 carried by a structure generally indicated 49. This structure 49 includes a sleeve 51 connected rigidly to a flange 52 fixed to a principal geared motor 53. The latter includes a frame 54 and a reversible electric motor 56 which is arranged to rotate the shaft 37 in known manner.

The structure 49 is rotatable on a strong rolling bearing 57 disposed between the sleeve 51 and a ring 58 fixed to the plate 14. The frame 54 carries a bar 59 which extends radially of the shaft 37 and supports a pin 61 perpendicular to the bar 59 itself. The pin 61 is fixed to the support 44 for the transducer 43 whereby the support 44 is connected rigidly to the frame 54.

The two arms 34 and 35 are interconnected by a gear system such that the arm 35 rotates in the opposite sense from the arm 34. In particular, a first gear 62 is fixed to the sleeve 51 coaxial with the shaft 37 and engages a transmission gear 63. This latter is rotatable on a double rolling bearing 64 carried by the arm 34.

The gear 63 engages another gear 66 fixed to a journal 67 which is rotatable in a second double rolling bearing 68 carried by the arm 34. Finally the arm 35 is fixed to the journal 67 whereby the arm is pivoted on the arm 34 by the pin 67. The diameter of the gear 66 is half of that of the gear 62 whereby the transmission ratio between the gear 62 and the gear 66 is 2:1.

When the geared motor 53 is actuated in a predetermined sense, the shaft 37 (Figure 1) is rotated together with the arm 34 through a predetermined angle, for example in an anti-clockwise sense. The arm 34 then makes the transmission gear 63 roll on the gear 62 fixed to the structure 49. The gear 63 thus also rotates in the anti-clockwise sense and makes the gear 66 rotate in the clockwise sense together with the journal 67 and the arm 35.

By virtue of the transmission ratio between the gear 62 and the gear 66, the latter is rotated in the opposite sense through twice the said predetermined angle. Hence, when the arm 34 rotates through an angle of 180°, the arm 35 is rotated through 360° in the opposite sense from the arm 34 and, hence, through 180° with respect to the carriage 13.

Since the two arms 34 and 35 are of the same length, the roller 33 moves each time along a rectilinear path which is diametral to the shaft 37. This eliminates any movement of the roller 33 relative to the grip 12 during the drive movement and enables the length of the grip 12 parallel to the wall 11 to be minimised. To advantage this length may be less than or equal to the diameter of the roller 33.

The bar 59 of the frame 54 is articulated to one end of a connecting rod 69 the other end of which is pivoted on a journal 71 carried eccentrically by a disk 72. This is fixed to the shaft of an auxiliary geared motor 73 carried by another bar 74 fixed to the transverse member 19.

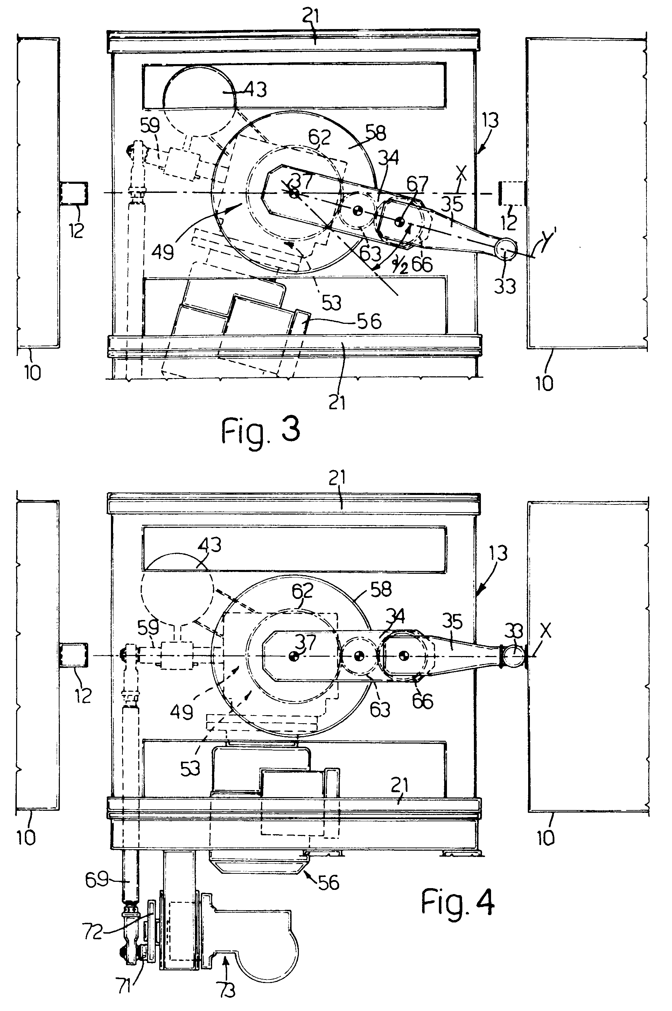

The geared motor 73 can be actuated to rotate the disk 72 through 180° each time. Correspondingly, the pin 71, which acts as a crank for the connecting rod 69, actuates the latter so as to reciprocate the frame 54 between the position of Figures 1 and 3 and the position of Figures 4 to 6.

The operation of the apparatus for removing boxes 10 from their seats and for inserting them therein is as follows.

Normally the apparatus is in the position of Figure 1 in which the arm 34 extends in the direction Y and the axis of the arm 35 is at an angle α to this direction Y. Thus the roller 33 is held in a rest position away from the grips 12 of the boxes 10. The carriage 13 may then be moved so as to bring it into correspondence with the seat of the box 10 to be withdrawn, for example the box 10 to the right in Figure 1.

The geared motor 53 is first actuated so as to move the arm 34 to the direction Y' by rotating it in an anti-clockwise sense through an angle α/2 (Figure 3). The arm 35 is in turn rotated relative to the carriage through an angle α in the clockwise sense, bringing it into alignment with the arm 34, in the direction Y'. The roller then moves radially along the direction Y', coming closer to the wall 11 of the box 10.

The geared motor 73 is then actuated (Figure 1) so as to rotate the disk 72 through 180°. The connecting rod 69 then pivots the bar 59, together with the support 44 for the transducer 43 and the structure 49 with the frame 54 from the position of Figure 3 to the position of Figure 4. The structure 49 then pivots the geared motor 53 together with the shaft 37 and its two arms 34 and 35 which are brought into alignment with the direction X whereby the roller 33 engages the grip 12.

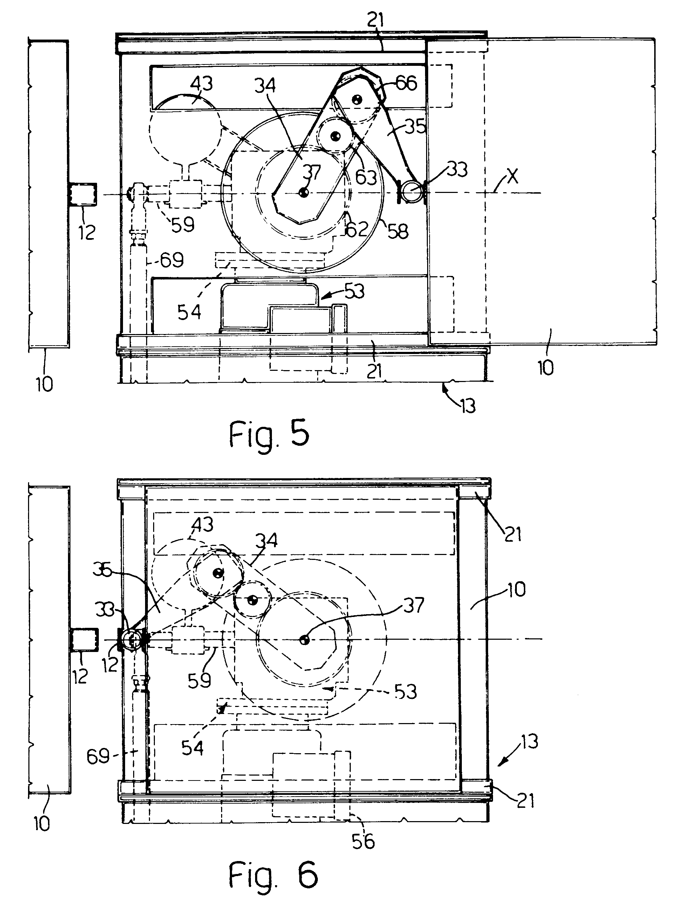

The geared motor 53 is then again actuated so as to pivot the arm 34 in the anti-clockwise sense. The arm 35 is thus rotated in the clockwise sense through twice the angle of the arm 34 whereby the roller 33 moves along the axis X and hence perpendicular to the wall 11. The two arms 34 and 35, passing through the position of Figure 5, are thus brought to the position of Figure 6 in which the roller 33 has removed the box 10 completely from its seat, placing it on the angle-section guides 21. The carriage 13 may now be moved so as to carry the box 10 which has been removed to the consultation zone.

In order to re-insert the box 10 in its seat, after the carriage 13 has been returned to its position in correspondence with this seat, the geared motor 53 is first actuated in the opposite sense from the preceding one. Thus the arms 34 and 35 are returned from the position of Figure 6 to the position of Figure 4 thus re-inserting the box 10 in its seat. The geared motor 73 is then actuated to rotate the disk 72 through a further 180° whereby the connecting rod 69 pivots the structure 49 in the clockwise sense from the position of Figure 4 to that of Figure 3. The arms 34 and 35 then rotate together with the structure 49 so as to disengage the roller 33 from the grip 12. Finally, by means of the geared motor 53, the arm 34 is rotated in the clockwise sense so as to bring the two arms 34 and 35 and the roller 33 into the rest position of Figure 1.

Whenever it is wished to withdraw a box 10 from the left hand rack, starting from the position of the arms 34 and 35 indicated in Figure 1, the shaft 37 is first rotated through 180°, for example in the anti-clockwise sense, by means of the geared motor 53. The arm 34 then, by means of the differential 62,63,66, rotates the arm 35 in the clockwise sense through 360° relative to the arm 34, whereby this is rotated through 180° with respect to the plate 14.

The arm 35 thus moves the roller 33 in the direction Y' to another rest position relative to the left-hand rack. Subsequently the cycle of removal of the box 10 from the left-hand rack to the carriage 13 is effected in the same manner as that described above.

The device described may also be used to move the box 10 from one seat to another in the same rack. In this case, when the box 10 is in the position of Figure 6, the carriage 13 is brought into correspondence with the seat in which it is to be inserted, after which the drive mechanism 32 is actuated in the manner described above so as to reinsert the box 10 in its new seat.

From what has been described, the advantages of the apparatus of invention over the known apparatus will be clear. In fact, the linkage 34, 35 and the gear system 62, 63, 66 make the mechanism 32 very compact and silent and reliable in operation. Moreover the perfectly rectilinear movement of the roller 33 from the position of Figure 4 to that of Figure 6 eliminates any movement whatsoever the roller and the tab 12.

It is understood that the removal and insertion apparatus described may be varied and improved without thereby departing from the scope of the claims. For example, each box 10 may be provided with two grips 12 on the two opposite transverse walls so as to enable it to be inserted equally well in a seat in either one of two facing racks. In this case, each grip 12 may project downwardly from the box 10 so as to enable the roller 33 to engage and disengage a grip 12 while the box 10 is on the carriage 13.

Thus, after a box 10 has been removed from a rack, by suitable activation of the two geared motors 53 and 73 the roller 33 may first be disengaged from the front grip 12 and brought to the adjacent rest position. The roller 33 may then be moved into its other rest position and engaged with the rear grip 12 of the same box 10. Finally the roller 33 may be driven to insert the box 10 in a selected seat in the opposite rack.

Moreover, the length of the arms 34 and 35 may be slightly different so as to allow the roller 33 to follow a slightly curved path. Finally, the transmission ratio between the gears 62 and 66 may be varied within certain limits.

## Claims

1. Apparatus for the removal of boxes from their respective seats in a mechanised filing or storage system, and for their insertion therein, the apparatus including a plurality of seats for the boxes (10), and a carriage (13) adapted to be brought into correspondence with a box (10) to be moved from the seat to the carriage (13), each box (10) having a grip member (12) for engagement by an entrainment element (33) on the carriage (13), characterised in that the said element (33) is part of a drive mechanism (32) including a linkage (34,35) having a first arm (35) on which the element (33) is disposed and means (53,73,62,63,66) which can be actuated so as to drive the linkage (34,35) to engage the element (33) with the grip member (12) and disengage it therefrom and so as to move the element (33) thus engaged along a substantially rectilinear path.

2. Apperatus according to Claim 1, characterised in that the linkage (34,35) includes a further arm (34) which is rotatably mounted on the carriage (13), the arms (34,35) being pivotally interconnected.

3. Apperatus according to Claim 2, characterised in that the means (53,73,62,63,66) which can be actuated include a reversible geared motor (53) arranged to rotate the said other arm (34) and a gear system (62,63,66) for rotating the first arm (35) in dependence on the rotation of the said other arm (34).

4. Apperatus according to Claim 3, characterised in that the gear system (62,63,66) includes at least one planet gear (63) carried by the said other arm (34) and arranged to rotate the said first arm (35) in the opposite sense from that of the said other arm (34).

5. Apperatus according to Claim 4, characterised in that the planet gear (63) is engaged with a gear (62) which is normally fixed and with another gear (66) which is fixed to the said first arm (35).

6. Apperatus according to Claim 5, characterised in that the arms (34,35) are of the same length and in that the transmission ratio between the essentially fixed gear (62) and the other gear (66) is 2:1 whereby the said element (33) is moved along a rectilinear path.

7. Apperatus according to Claim 6, characterised in that the grip member is constituted by a tab (12) of inverted-U shape and in that the element (33) comprises a roller (33) arranged to engage the tab (12), the length of the tab (12) in a direction perpendicular to the removal and insertion movement being less than or equal to the diameter of the roller (33).

8. Apperatus according to Claim 6 or 7, characterised in that the said other arm (34) is connected by intermediate means (39) to a position transducer (43) arranged to control the rotation of the geared motor (53).

9. Apperatus according to Claim 8, characterised in that the essentially fixed gear (62) is fixed to a structure (49) which is rotatable on the carriage (13) and carries the geared motor (53), the structure (49) being arranged to be rotated by a second geared motor (73).

10. Apperatus according to Claim 9, characterised in that the second geared motor (73) is connected to the structure (49) by a crank and connecting rod mechanism (69,71), the second geared motor (73) being actuable to rotate through 180° each time.

11. Apperatus according to one of the proceeding claims, for a system including a pair of facing racks, characterised in that the linkage (34,35) is arranged to take up a rest position for each of the racks such as not to interfere with the grip members (12) during the movement of the carriage (13), the linkage (34,35) being moved from one rest position to the other by a rotation through 180°

12. Apperatus according to Claim 10, characterised in that the box (10) has two grip members (12) fixed to its two opposite walls so as to be engageable and disengageable by the entrainment element (33) when the box (10) is on the carriage (13) whereby the box (10) may be transferred from one rack to the other of the pair.

Fig.1

Fig. 2

EP 0 492 472 A1

Fig. 3

Fig. 4

Fig. 5

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 619 575 (GARETH D. SUMMA) | 1-6 | B65G1/04 |
| A | * the whole document * | 8,11,12 | |
| | --- | | |
| P,X | EP-A-0 428 193 (SALVAGNINI S.P.A.) | 1-6 | |
| | * the whole document * | | |
| | --- | | |
| A | GB-A-1 395 058 (M. A. GODDARD) | 1-6 | |
| | * the whole document * | | |
| | --- | | |
| A | PATENT ABSTRACTS OF JAPAN vol. 10, no. 33 (M-452)(2090) 8 February 1986 & JP-A-60 188 212 ( HITACHI SEIKI K. K. ) 25 September 1985 * abstract * | 1,7 | |
| | ----- | | |
| | | | **TECHNICAL FIELDS SEARCHED (Int. Cl.5 )** |
| | | | B65G B23Q |

The present search report has been drawn up for all claims

| Place of search | Date of completion of the search | Examiner |
|---|---|---|
| THE HAGUE | 20 MARCH 1992 | VAN ROLLEGHEM F. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P0401)